Europäisches Patentamt

**European Patent Office**

**Office européen des brevets**

(19)

(11) Numéro de publication: **0 508 854 B1**

(12) **FASCICULE DE BREVET EUROPEEN**

(45) Date de publication de fascicule du brevet: **24.05.95**

(51) Int. Cl.⁶: **G01B 15/02**, G01B 15/00, G01N 22/02

(21) Numéro de dépôt: **92400834.5**

(22) Date de dépôt: **26.03.92**

(54) **Dispositif de mesure en continu et sans contact de l'épaisseur d'une mince couche conductrice sur un support isolant, du genre fibre ou ruban, qui défile.**

(30) Priorité: **29.03.91 FR 9103878**

(43) Date de publication de la demande:
**14.10.92 Bulletin 92/42**

(45) Mention de la délivrance du brevet:
**24.05.95 Bulletin 95/21**

(84) Etats contractants désignés:
**DE FR GB IT NL SE**

(56) Documents cités:
DE-A- 3 107 675      DE-A- 3 927 394
GB-A- 1 106 185      US-A- 2 491 418
US-A- 2 548 598      US-A- 3 401 333

**IEEE TRANSACTIONS ON INSTRUMENTA-
TION AND MEASUREMENT, 1 mars 1974, pages 100-101; M.A. RZEPECKA: 'A microwave
system for measurement of the diameter of
thin electric fibers'**

(73) Titulaire: **ALCATEL N.V.
Strawinskylaan 341,
NL-1077 XX Amsterdam (NL)**

(84) Etats contractants désignés:
**DE GB IT NL SE**

(73) Titulaire: **ALCATEL FIBRES OPTIOUES
35 rue Jean Jaurès, BP 20
F-95871 Bezons Cedex (FR)**

(84) Etats contractants désignés:
**FR**

(72) Inventeur: **Boniort, Jean-Yves
2, rue des Mimosas
F-91470 Limours (FR)**
Inventeur: **Roussy, Georges
17, rue Ernest Renan
F-54520 Laxou (FR)**

(74) Mandataire: **Laroche, Danièle et al
c/o SOSPI
14-16 rue de la Baume
F-75008 Paris (FR)**

EP 0 508 854 B1

Rank Xerox (UK) Business Services
(3.10/3.09/3.3.3)

## Description

La présente invention concerne un dispositif de mesure en continu et sans contact de l'épaisseur d'une mince couche conductrice sur un support isolant, du genre fibre ou ruban, qui défile.

Elle se rapporte particulièrement à la mesure d'un dépôt de carbone dont l'épaisseur est d'environ 0,1 μm sur une fibre de verre de diamètre 125 μm, qui se déplace le long de son axe, dans le bâti de fibrage, à une vitesse comprise entre quelques dizaines de mètres et quelques centaines de mètres par minute.

On connaît un procédé optique de mesure sans contact du diamètre d'une fibre optique par défilement dans un faisceau laser ; la précision de la mesure est d'environ ± 0,2 μm. Un tel procédé pourrait être envisagé pour des dépôts dont l'épaisseur est supérieure à 1 μm, mais pas pour les épaisseurs visées par la présente invention.

Le brevet US-A- 4 952 226 décrit un procédé de ce genre basé sur la détection de la lumière d'un laser diffractée par une fibre, mais le résultat d'une telle mesure est très perturbé par les déplacements latéraux de la fibre, pratiquement inévitables sur le bâti de fibrage.

On connaît par ailleurs des appareils de mesure disponibles commercialement, dont le principe est basé sur l'induction de courants de Foucault à très haute fréquence. Ces dispositifs permettent de mesurer des dépôts d'épaisseur supérieure à 5 μm sur des objets de diamètre au moins égal à 1 mm. L'extrapolation de la méthode mise en oeuvre dans ces appareils à des objets de plus petit diamètre, munis de dépôts plus minces, n'est techniquement pas envisageable.

On connaît enfin, par le brevet US-2548598 un dispositif pour détecter les défauts que présente un fil conducteur. Ce dispositif comporte une cavité cylindrique micro-onde dans laquelle passe le fil métallique. Les caractéristiques de la cavité varient lorsque le fil présente des défauts tels que des imperfections de surface, de plus haute résistivité que le fil lui-même, ou des coupures.

La présente invention a pour but de proposer un dispositif industriel permettant de réaliser sur une fibre qui défile une mesure sans contact, préservant la résistance mécanique de la fibre.

La présente invention a pour objet un dispositif de mesure en continu et sans contact d'une caractéristique d'un corps conducteur, comportant :

- un générateur micro-onde associé par des moyens de couplage à une cavité résonante dans lequel défile ledit corps,
- des moyens de couplage de ladite cavité à un dispositif de détection du facteur de transmission de ladite cavité,

caractérisé par le fait que, ladite caractéristique étant l'épaisseur, et ledit corps étant une mince couche conductrice sur un support isolant, du genre fibre ou ruban, ladite cavité comprend un fil métallique en forme d'hélice fixé à ses extrémités à deux plaques métalliques, ledit support isolant étant susceptible de défiler sensiblement dans l'axe de ladite hélice, et par le fait que ledit facteur de transmission est directement fonction de ladite épaisseur, ladite mesure étant effectuée à fréquence constante.

Il est tout à fait surprenant de constater que, lorsque ledit support, et notamment une fibre optique, défile dans l'hélice avec sa mince couche conductrice, la fréquence de résonance de la cavité reste fixe ; seule l'amplitude du signal varie en fonction de l'épaisseur de la couche. Il n'est donc pas nécessaire d'accorder automatiquement la fréquence du générateur au cours de la mesure, ce qui impliquerait la mise en oeuvre de moyens complexes.

De préférence ladite hélice est blindée, c'est-à-dire enfermée dans un conteneur métallique.

Pour une fibre optique de diamètre 125 μm, dont la couche de carbone est de l'ordre de 0,1 μm à 0,05 μm, on peut mettre en oeuvre une hélice d'une dizaine de centimètres constituée d'un fil métallique, et présentant un diamètre interne de l'ordre de 3 mm et un pas de l'ordre de 2 à 3 mm.

Selon un mode de réalisation avantageux, ledit générateur micro-onde comprend un guide coaxial terminé par une antenne émettrice dipolaire ou homopolaire, susceptible d'émettre dans la direction du champ électrique de ladite hélice compatible avec la résonance ; ledit dispositif de détection comprend une antenne réceptrice de structure analogue à celle de ladite antenne émettrice.

D'autres caractéristiques et avantages de la présente invention apparaîtront au cours de la description suivante de modes de réalisation donnés à titre illustratif mais nullement limitatif. Dans le dessin annexé :

- La figure 1 est un schéma très simple du dispositif selon l'invention.
- La figure 2 est une vue schématique semi-coupée d'une cavité résonante appartenant au dispositif de la figure 1.
- La figure 3 montre le signal S (en mV) mesuré à la sortie de la cavité selon l'invention en fonction de la fréquence f (GHz) du générateur micro-onde, pour des fibres munies de couches de carbone d'épaisseurs diverses.
- La figure 4 est une courbe montrant les variations du signal S (en mV) mesuré lorsqu'une fibre défile à l'intérieur de la cavité selon l'invention.
- La figure 5 est un schéma d'une variante de dispositif selon l'invention.

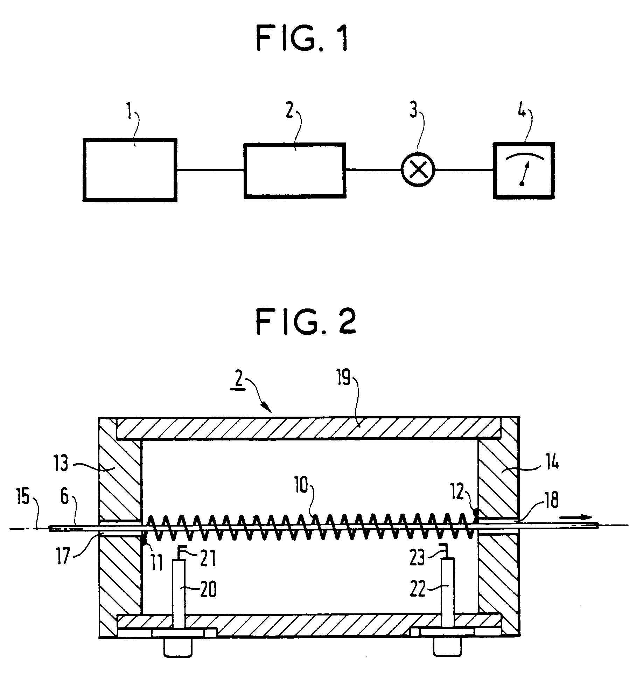

On voit dans la figure 1 un générateur micro-onde 1 couplé à une cavité résonante 2 dont on mesure le facteur de transmission à l'aide d'un détecteur 3 dont la sortie est connectée à un millivolmètre 4.

La cavité résonante 2, visible plus en détail dans la figure 2, comprend une hélice 10 d'axe 15, constituée d'un fil métallique en argent ou laiton argenté, de diamètre 0,3 mm ; elle présente un diamètre intérieur de 3 mm, un pas de 2 mm environ et une longueur de 10 cm ; ses extrémités 11 et 12 sont fixées à deux plaques métalliques 13 et 14, dites de court-circuit, et où sont prévues des ouvertures 17 et 18 d'un diamètre de 2 à 3 mm pour laisser le passage à une fibre optique 6 sensiblement dans l'axe 15. Il est souhaitable que l'hélice 10 soit blindée, c'est-à-dire enfermée dans une enceinte métallique de paroi 19, par exemple un cylindre de 30 mm de diamètre.

Le générateur micro-onde comporte un guide coaxial 20 terminé par une antenne monopolaire 21 dont l'extrémité est orientée parallèlement à l'axe 15. Cette antenne 21 induit un champ électrique dans la direction correspondant au mode de résonance voulu dans la cavité. Grâce à une telle disposition, le champ se concentre où va défiler la fibre 6 à l'intérieur de l'hélice. Ce paramètre est extrêmement important pour la précision de la mesure.

Le détecteur 3 comporte un coaxial 22 avec une antenne réceptrice 23 analogues au coaxial 20 et à l'antenne 21. Il convient de coupler de la même manière les antennes 21 et 23. Le résultat des mesures est lu sur un millivoltmètre 4.

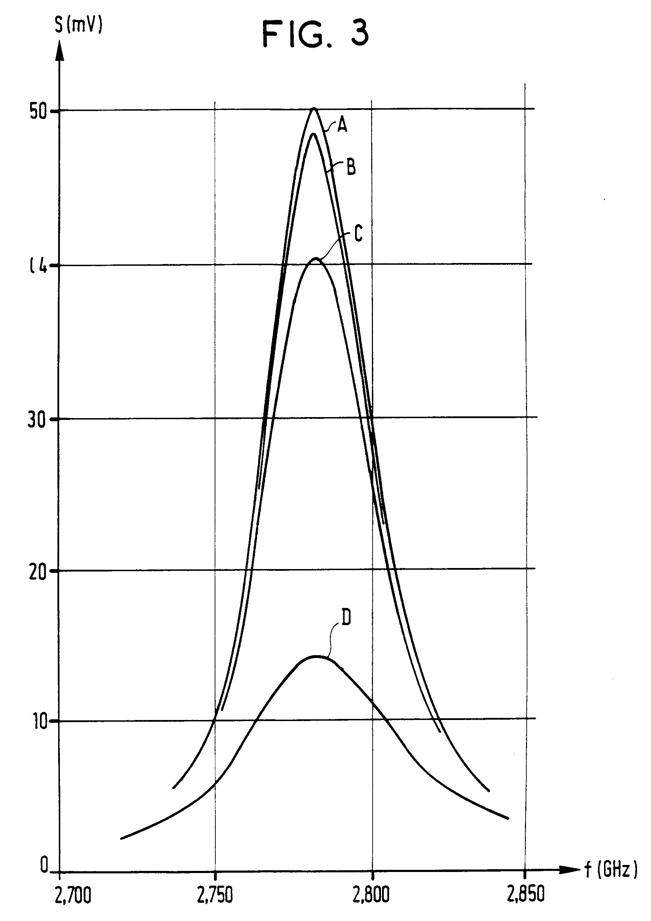

Si on place dans l'hélice 10 des fibres 6 statiques munies de couches de carbone ayant diverses épaisseurs e et si l'on fait varier la fréquence f du générateur, on lit un signal S (mV) reporté dans la figure 3.

La courbe A correspond à la cavité sans fibre ; les courbes B, C, D, correspondent respectivement à des épaisseurs e telles que les résistances linéiques soient 2500 kΩ/cm, 70 kΩ/cm, 16 kΩ/cm.

On observe que, contrairement à ce que l'on pouvait prévoir, la fréquence de résonance est la même, qu'il y ait ou non une fibre dans la cavité ; cette fréquence ne varie pas non plus avec l'épaisseur de la couche de carbone sur la fibre. Par ailleurs on constate que l'amplitude du signal ne dépend pas de la position latérale de la fibre dans l'hélice 10 vis-à-vis de l'axe 15 ; cette amplitude ne dépend donc que de l'épaisseur e de la couche. La mesure ne nécessite aucun recalage de fréquence, ce qui simplifie notablement le montage.

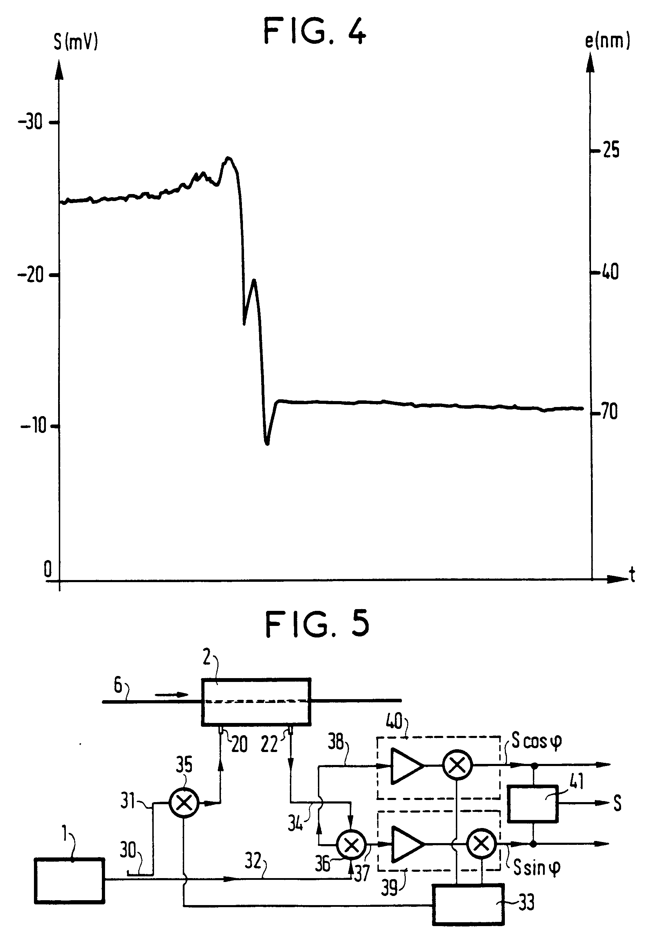

La figure 4 montre un enregistrement du signal S (mV) en fonction du temps t de défilement de la fibre. Sur un second axe d'ordonnées le signal S est converti en épaisseurs e (en nanomètres).

Quand la fibre défile, la mesure exprime la valeur moyenne de l'épaisseur sur la longueur de fibre qui passe dans l'hélice 10. A une vitesse de défilement de 5 mètres/minute, la mesure est faite sur environ 20 cm de fibre. Pour conserver cette définition à grande vitesse, il est nécessaire d'utiliser un voltmètre ayant une bande passante élevée, supérieure à 100 Hz pour des mesures d'environ 500 mètres/minute.

Dans l'exemple apparaissant dans la figure 4, l'épaisseur moyenne de la couche mesurée est de 30 nm environ ; puis apparaît une brutale augmentation de l'épaisseur jusqu'à 70 nm qui crée une chute notable du signal S.

La mesure est très sensible dans la gamme d'épaisseurs de l'ordre de 50 nm correspondant à une résistance linéique de 10 à 30 kΩ/cm.

Il est possible d'accroître encore la sensibilité de la mesure en mettant en oeuvre le dispositif de la figure 5.

Ce dispositif est recommandé pour mesurer le facteur de transmission complexe de la cavité 2 (amplitude et phase du signal S).

Le signal issu du générateur 1 est séparé en deux signaux 31 et 32 à l'aide d'un coupleur directif 30. Le premier signal 31 passe dans un modulateur d'amplitude 35 connecté à un oscillateur 33 (à 1kHz par exemple) et pénètre dans la cavité 2.

Le second signal 32, qui sert de signal de référence, ainsi que le signal 34 détecté à la sortie de la cavité 2, aboutissent à un double mélangeur équilibré 36. Les signaux 37 et 38 qui en sortent sont traités par deux détecteurs synchrones 39 et 40, dont sont issus les deux signaux $S \sin \phi$ et $S \cos \phi$ déterminant l'amplitude et la phase du signal S. L'amplitude S peut être directement obtenue par un circuit analogique 41.

Bien entendu l'invention n'est pas limitée aux modes de réalisation qui viennent d'être décrits, aussi bien au niveau du traitement du signal qu'au niveau de la forme de l'hélice.

Ainsi l'hélice peut présenter des spires de forme rectangulaire ; elle peut être remplacée par des moyens équivalents adaptés à la section du support isolant qui la traverse.

**Revendications**

1. Dispositif de mesure en continu et sans contact d'une caractéristique d'un corps conducteur, comportant :
   - un générateur micro-onde (1) associé par des moyens de couplage (20) à une cavité résonante (2) dans lequel défile ledit corps,
   - des moyens de couplage (22) de ladite cavité (2) à un dispositif (23) de détection du facteur de transmission de ladite cavité (2),

caractérisé par le fait que, ladite caractéristique étant l'épaisseur, et ledit corps étant une mince couche conductrice sur un support isolant, du genre fibre ou ruban, ladite cavité (2) comprend un fil métallique (10) en forme d'hélice fixé à ses extrémités à deux plaques métalliques 13, 14), ledit support isolant (6) étant susceptible de défiler sensiblement dans l'axe (15) de ladite hélice (10), et par le fait que ledit facteur de transmission est directement fonction de ladite épaisseur, ladite mesure étant effectuée à fréquence constante.

2. Dispositif de mesure selon la revendication 1, caractérisé par le fait que ledit générateur micro-onde (1) comprend un guide coaxial (20) terminé par une antenne émettrice (21) dipolaire ou homopolaire, susceptible d'émettre dans la direction du champ électrique de ladite hélice (10) compatible avec la résonance.

3. Dispositif de mesure selon la revendication 2, caractérisé par le fait que ledit dispositif de détection (3) comprend une antenne réceptrice (23) de structure analogue à celle de ladite antenne émettrice (21).

4. Dispositif de mesure selon l'une des revendications précédentes, caractérisé par le fait que, pour une fibre optique (6) de diamètre 125 μm, dont la couche de carbone est de l'ordre de 0,1 μm à 0,05 μm, ladite hélice (10) est formée d'un fil métallique, présente un diamètre interne de l'ordre de 3 mm, un pas de l'ordre de 2 à 3 mm et une longueur de l'ordre d'une dizaine de centimètres.

## Claims

1. Apparatus for measuring continuously and without contact a characteristic of a conducting body, including:

a microwave generator (1) associated by coupling means (20) to a resonant cavity (2) in which said body runs, and

means for coupling (22) said cavity (2) to a detection device (23) for detecting the transmission factor of said cavity (2),

said apparatus being characterized by the fact that said characteristic is thickness, and said body is a thin conducting layer on an insulating support such as a fiber or a tape, said cavity (2) comprising a metal wire (10) in the form of a helix which is fixed at its ends to two metal plates (13, 14), said insulating support (6) being suitable for running substantially along the axis (15) of said helix (10);

and by the fact that said factor is a direct function of said thickness, said measurement being performed at constant frequency.

2. Measuring apparatus according to claim 1, characterized by the fact that said microwave generator (1) comprises a coaxial waveguide (20) terminated by a dipole or a homopolar transmitting antenna (21) suitable for transmitting in the direction of the electric field of said helix (10) and compatible with resonance.

3. Measuring apparatus according to claim 2, characterized by the fact that said detection device (3) comprises a receiving antenna (23) that is analogous in structure to said transmitting antenna (21).

4. Measuring apparatus according to any preceding claim,
characterized by the fact that for an optical fiber (6) having a diameter of 125 μm, and a carbon layer having a thickness of the order of 0.1 μm to 0.05 μm, said helix (10) is constituted by a metal wire, has an inside diameter of about 3 mm, has a pitch of about 2 mm to 3 mm, and has a length of about 10 cm.

## Patentansprüche

1. Vorrichtung zur kontinuierlichen und berührungslosen Messung eines Kennwerts eines leitenden Körpers,
   - mit einem Mikrowellengenerator (1), der über Koppelmittel (20) mit einem Resonanzhohlraum (2) gekoppelt ist, durch den der Körper verläuft,
   - mit Mitteln (22) zum Koppeln des Hohlraums (2) an eine Vorrichtung (3) zur Erfassung des Übertragungsfaktors des Hohlraums (2),

dadurch gekennzeichnet, daß, falls der Kennwert eine Dicke und der Körper eine dünne leitenden Schicht auf einem isolierenden Träger von der Art einer Faser oder eines Bandes ist, der Hohlraum (2) einen Metalldraht (10) in Spiralform aufweist, der mit seinen Enden an zwei Metallplatten (13, 14) befestigt ist, wobei der isolierende Träger (6) im wesentlichen entlang der Achse (15) der Spirale (10) verläuft, und daß der Übertragungsfaktor unmittelbar von der Dicke abhängt, wobei die Messung bei konstanter Frequenz erfolgt.

2. Meßvorrichtung nach Anspruch 1, dadurch gekennzeichnet, daß der Mikrowellengenerator (1) einen koaxialen Leiter (20) aufweist, der in einer bipolaren oder homopolaren Sendeantenne (21) endet, die in der mit der Resonanz kompatiblen Richtung des elektrischen Felds der Spirale (10) aussenden kann.

3. Meßvorrichtung nach Anspruch 2, dadurch gekennzeichnet, daß die Erfassungsvorrichtung (3) eine Empfangsantenne (23) der gleichen Struktur wie die Sendeantenne (21) enthält.

4. Meßvorrichtung nach einem der vorhergehenden Ansprüche, dadurch gekennzeichnet, daß für eine Lichtleitfaser (6) eines Durchmessers von 125 μm, deren Kohlenstoffschicht eine Dicke zwischen 0,1 und 0,05 μm aufweist, die Spirale (10) von einem Metalldraht gebildet ist und einen Innendurchmesser von etwa 3 mm sowie einen Windungsgang von etwa 2 bis 3 mm sowie eine Länge in der Größenordnung von etwa zehn Zentimetern besitzt.

# FIG. 1

# FIG. 2

# FIG. 3

# FIG. 4

# FIG. 5